(19) **Europäisches Patentamt / European Patent Office / Office européen des brevets**

(11) **EP 4 436 853 B1**

(12) **FASCICULE DE BREVET EUROPEEN**

(45) Date de publication et mention de la délivrance du brevet:
**15.10.2025 Bulletin 2025/42**

(21) Numéro de dépôt: **22813636.2**

(22) Date de dépôt: **20.10.2022**

(51) Classification Internationale des Brevets (IPC):
**B60W 30/14** $^{(2006.01)}$        **B60W 40/09** $^{(2012.01)}$
**B60W 50/08** $^{(2020.01)}$        **B60W 50/10** $^{(2012.01)}$
**B60W 50/00** $^{(2006.01)}$

(52) Classification Coopérative des Brevets (CPC):
**B60W 50/082; B60W 30/14; B60W 40/09; B60W 50/08; B60W 50/10;** B60W 2050/0002; B60W 2520/00; B60W 2540/00; B60W 2552/00

(86) Numéro de dépôt international:
**PCT/FR2022/051979**

(87) Numéro de publication internationale:
**WO 2023/094739 (01.06.2023 Gazette 2023/22)**

(54) **PROCÉDÉ ET DISPOSITIF DE CONTRÔLE D'UN SYSTÈME D'AIDE À LA CONDUITE D'UN VÉHICULE**

VERFAHREN UND VORRICHTUNG ZUR STEUERUNG EINES FAHRERUNTERSTÜTZUNGSSYSTEMS EINES FAHRZEUGS

METHOD AND DEVICE FOR CONTROLLING A VEHICLE DRIVER ASSISTANCE SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.11.2021 FR 2112414**

(43) Date de publication de la demande:
**02.10.2024 Bulletin 2024/40**

(73) Titulaire: **Stellantis Auto SAS 78300 Poissy (FR)**

(72) Inventeurs:
• **EL HANBALI, Hamza** Casablanca, 20580 (MA)
• **ET-THAQFY, Yassine** Casablanca, 20620 (MA)
• **ABOULISSANE, Badreddine** TAROUDANT, 83350 (MA)

(74) Mandataire: **ESIP Stellantis Auto SAS Service REIP - YT800 43, rue Jean Pierre Timbaud 78300 Poissy (FR)**

(56) Documents cités:
**US-A1- 2017 297 564     US-A1- 2021 086 773**

• **WOLTER T-M ET AL: "EIN AUF FUZZY-METHODEN BASIERENDES SITUATIONS-HANDLUNGSMODELL DES FAHRERVERHALTENS", ATZ, SPRINGER VIEWEG, DE, vol. 99, no. 3, 1 March 1997 (1997-03-01), pages 142 - 147, XP000682346, ISSN: 0001-2785**

## Description

### Domaine technique

La présente invention concerne les procédés et dispositifs de contrôle de système d'aide à la conduite d'un véhicule, notamment un véhicule automobile. La présente invention concerne également un procédé et un dispositif de contrôle d'un véhicule, par exemple un véhicule autonome ou semi-autonome. La présente invention concerne également un procédé et un dispositif de détermination des paramètres de contrôle d'un ou plusieurs systèmes d'aide à la conduite embarqués dans un véhicule.

### Arrière-plan technologique

Les véhicules contemporains embarquent de plus en plus de fonctions pour assister le conducteur dans la conduite du véhicule. De telles fonctions sont généralement mises en œuvre par des systèmes d'aide à la conduite, connus sous le nom de systèmes dits ADAS (de l'anglais « Advanced Driver-Assistance System » ou en français « Système d'aide à la conduite avancé »). Les systèmes d'aide à la conduite les plus aboutis assurent le contrôle du véhicule qui devient un véhicule dit autonome, c'est-à-dire un véhicule apte à rouler dans l'environnement routier sans intervention du conducteur.

Les systèmes ADAS embarqués dans un véhicule sont mis en œuvre en fonction de données sur l'environnement du véhicule, de consignes entrées par l'utilisateur du véhicule et de paramètres de contrôle définis par exemple lors de la conception de ces systèmes ADAS.

Le fonctionnement d'un système ADAS est ainsi le même d'un véhicule à un autre et ne s'adapte pas ou peu au type d'utilisateur du véhicule, sauf pour ce qui est des valeurs de consigne fournies en entrée par l'utilisateur le cas échéant, alors que la façon de conduire un véhicule varie entre les utilisateurs.

Par exemple, la manière de conduire un véhicule évolue selon l'âge du conducteur. En effet, avec l'âge, la perception de l'environnement du véhicule par le conducteur change, notamment en raison de facteurs tels qu'une dégradation de la vision ou de la sensibilité auditive avec l'âge ou encore des réflexes moteur qui sont moins rapide au fur et à mesure du vieillissement. Ainsi, les personnes plus âgées conduisent généralement avec une vitesse inférieure et/ou avec des accélérations moins brusques.

Un fonctionnement générique d'un système ADAS n'est ainsi pas adapté à tous les types de conducteur.

En outre, l'état de la technique est connu du document US2017297564A1 correspondant au préambule de la revendication 1.

### Résumé de la présente invention

Un objet de la présente invention est de résoudre au moins un des inconvénients de l'art antérieur.

Un objet de la présente invention est par exemple d'adapter le contrôle d'un système ADAS d'un véhicule au conducteur qui le conduit.

Un autre objet de la présente invention est par exemple d'améliorer le contrôle d'un ou plusieurs systèmes d'aide à la conduite embarqués dans un véhicule.

Selon un premier aspect, la présente invention concerne un procédé de contrôle d'un système d'aide à la conduite, dit système ADAS, d'un premier véhicule, le procédé comprenant les étapes suivantes :

- réception d'une première information représentative d'âge d'un conducteur du premier véhicule ;
- réception de premières données représentatives d'un environnement du premier véhicule et de deuxièmes données représentatives de paramètres de conduite du premier véhicule ;
- sélection d'un modèle de prédiction de paramètres de contrôle de système ADAS parmi une pluralité de modèles de prédiction de paramètres de contrôle de système ADAS en fonction de la première information ;
- détermination d'un ensemble de paramètres de contrôle du système ADAS en alimentant le modèle de prédiction sélectionné avec les premières données et les deuxièmes données ;
- contrôle du système ADAS en fonction de l'ensemble de paramètres de contrôle, caractérisé en ce qu'en outre, durant une phase d'apprentissage préalable aux étapes de réceptions, de sélection, de détermination et de contrôle, les étapes suivantes :

  - réception, pour chaque deuxième véhicule d'un ensemble de deuxièmes véhicules, d'une deuxième information représentative d'âge d'un conducteur de chaque deuxième véhicule ;
  - réception, pour chaque deuxième véhicule, d'un ensemble de données comprenant des troisièmes données représentatives d'un environnement du deuxième véhicule et des quatrièmes données représentatives de paramètres de conduite du deuxième véhicule ;
  - partitionnement des données de l'ensemble de données en une pluralité de groupes en fonction des deuxièmes informations et de troisièmes informations représentatives de valeur de secousse maximale pour chaque deuxième véhicule obtenues des quatrième données.

Selon une variante, le procédé comprend en outre, durant la phase d'apprentissage, une étape d'apprentissage, pour chaque groupe de la pluralité, d'un modèle de prédiction de paramètres de contrôle de système ADAS de la pluralité de modèles de prédiction de paramètres de contrôle de système ADAS à partir des données de l'ensemble de données associées à chaque groupe.

Selon une variante supplémentaire, le partitionnement est un partitionnement en k-moyennes.

Selon encore une variante, chaque groupe est défini par un intervalle d'âges compris entre un âge minimal et un âge maximal, la sélection d'un modèle de prédiction de paramètres de contrôle de système ADAS comprenant une comparaison entre la première information et chaque intervalle d'âges de la pluralité de groupes, le modèle de prédiction de paramètres de contrôle de système ADAS sélectionné correspondant au modèle de prédiction associé au groupe défini par l'intervalle d'âges comprenant l'âge du conducteur du premier véhicule.

Selon une variante additionnelle, chaque modèle de prédiction de paramètres de contrôle de système ADAS de la pluralité de modèles de prédiction de paramètres de contrôle de système ADAS est mis en œuvre dans un réseau de neurones à propagation avant.

Selon une autre variante, les premières données comprennent des données représentatives de type de route sur laquelle circule le premier véhicule, les deuxièmes données comprennent des données représentatives de vitesse du premier véhicule et l'ensemble de paramètres de contrôle du système ADAS comprend des données représentatives de valeur de secousse maximale et des données représentatives d'accélération maximale.

Selon un deuxième aspect, la présente invention concerne un dispositif de contrôle d'un système ADAS d'un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

## Brève description des figures

D'autres caractéristiques et avantages de la présente invention ressortiront de la description des exemples de réalisation particuliers et non limitatifs de la présente invention ci-après, en référence aux figures 1 à 5 annexées, sur lesquelles :

[Fig. 1] illustre schématiquement un environnement de communication d'un premier véhicule et d'un ensemble de deuxièmes véhicules, selon un exemple de réalisation particulier et non limitatif de la présente invention ;

[Fig. 2] illustre schématiquement un partitionnement de données obtenues des deuxièmes véhicules de la figure 2 en une pluralité de groupes, selon un exemple de réalisation particulier et non limitatif de la présente invention ;

[Fig. 3] illustre schématiquement un réseau de neurones pour la détermination de paramètres de contrôle d'un système d'aide à la conduite embarqué dans le premier véhicule de la figure 1, selon un exemple de réalisation particulier et non limitatif de la présente invention ;

[Fig. 4] illustre schématiquement un dispositif configuré pour contrôler un ou plusieurs systèmes d'aide à la conduite embarqués dans le premier véhicule de la figure 1, selon un exemple de réalisation particulier et non limitatif de la présente invention ;

[Fig. 5] illustre un organigramme des différentes étapes d'un procédé de contrôle d'un ou plusieurs systèmes d'aide à la conduite embarqués dans le premier véhicule de la figure 1, selon un exemple de réalisation particulier et non limitatif de la présente invention.

## Description des exemples de réalisation

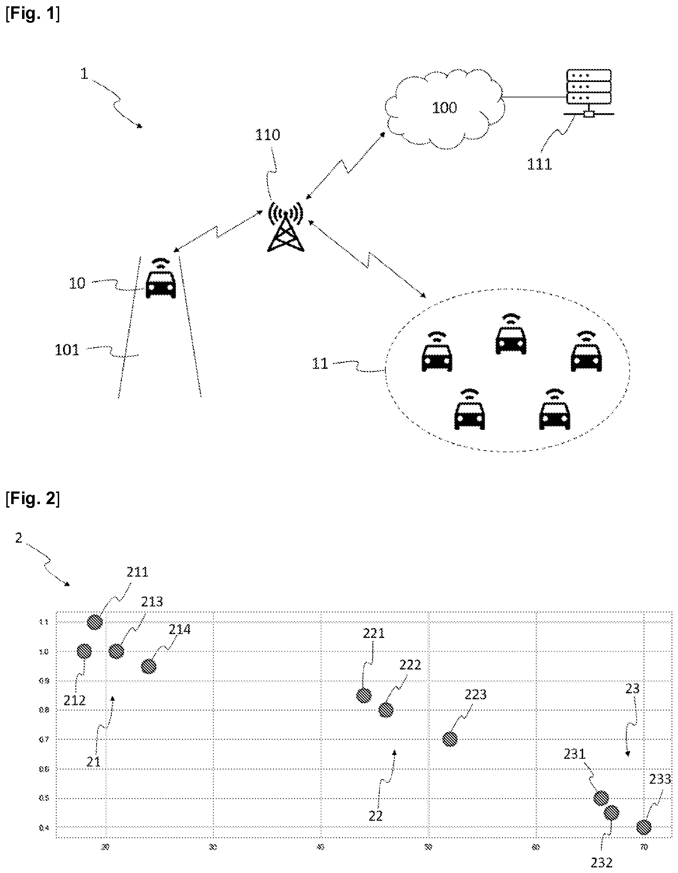

Un procédé et un dispositif de contrôle d'un ou plusieurs systèmes d'aide à la conduite embarqués dans un véhicule vont maintenant être décrits dans ce qui va suivre en référence conjointement aux figures 1 à 5. Des mêmes éléments sont identifiés avec des mêmes signes de référence tout au long de la description qui va suivre.

Selon un exemple particulier et non limitatif de réalisation de la présente invention, le contrôle d'un ou plusieurs systèmes ADAS d'un premier véhicule comprend la réception, par le dispositif mettant en œuvre le processus de contrôle, d'une première information indiquant l'âge du conducteur ou de la conductrice du premier véhicule. Cette première information est par exemple entrée par le conducteur via une IHM (Interface Homme Machine) embarquée dans le premier véhicule. Des premières données relatives à l'environnement du premier véhicule (par exemple la nature de la voie de circulation empruntée par le premier véhicule) ainsi que des deuxièmes données relatives à un ou plusieurs paramètres de conduite du premier véhicule (par exemple des informations de vitesse) sont également reçues par le dispositif mettant en œuvre le processus. Un modèle de prédiction de paramètres de contrôle du système ADAS est sélectionné parmi une pluralité de modèles à partir de la première information. Un ensemble de paramètres de contrôle du système ADAS est alors prédit ou déterminé en alimentant le modèle de prédiction sélectionné avec les premières et deuxièmes données. Cet ensemble de paramètres est alors utilisé pour contrôler le système ADAS, et in fine le premier véhicule.

La sélection d'un modèle de prédiction en fonction de l'âge du conducteur permet d'adapter la détermination des paramètres de contrôle du système ADAS à l'âge du conducteur, ce qui permet d'adapter le fonctionnement du système ADAS à l'âge du conducteur et à son style de conduite qui en découle.

La détermination des paramètres de contrôle (ainsi que l'apprentissage des modèles de prédiction) est par exemple mise en œuvre par une méthode d'apprentissage automatique, dite aussi d'apprentissage machine (de l'anglais « machine learning »). Les premières et les deuxièmes données sont par exemple utilisées pour alimenter un (ou plusieurs) modèle(s) de prédiction dont les paramètres ont été appris durant une phase d'apprentissage à partir de données collectées d'un ensemble de deuxièmes véhicules, tel qu'expliqué ci-dessous en regard des figures 1 à 5.

La figure 1 illustre schématiquement un environnement de communication d'un premier véhicule 10, selon un exemple de réalisation particulier et non limitatif de la présente invention.

La figure 1 illustre un environnement de communication 1 pour un premier véhicule 10 circulant sur une route 101 à une ou plusieurs voies de circulation.

Le premier véhicule 10 correspond par exemple à un véhicule à moteur thermique, à moteur(s) électrique(s) ou encore un véhicule hybride avec un moteur thermique et un ou plusieurs moteurs électriques. Le premier véhicule 10 correspond ainsi par exemple à un véhicule terrestre, par exemple une automobile, un camion, un car, une moto. Enfin, le premier véhicule 10 correspond par exemple à un véhicule circulant dans un mode autonome ou semi-autonome, par exemple selon un niveau supérieur ou égal à 2 selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, et le niveau 5 correspondant à un véhicule complètement autonome. Le premier véhicule 10 correspond ainsi par exemple à un véhicule adapté pour circuler dans un mode de conduite autonome ou semi-autonome, c'est-à-dire sous la supervision partielle ou totale d'un ou plusieurs systèmes ADAS embarqués dans le premier véhicule 10.

Le premier véhicule 10 embarque ainsi avantageusement un ou plusieurs premiers systèmes d'aide à la conduite, dit ADAS (de l'anglais « Advanced Driver-Assistance System » ou en français « Système d'aide à la conduite avancé »), assistant le conducteur dans la conduite du premier véhicule 10 et/ou assurant le contrôle du premier véhicule 10 qui est apte à rouler dans son environnement 1 avec une intervention limitée du conducteur, voire sans intervention du conducteur.

Le ou les premiers systèmes ADAS embarqués dans le premier véhicule 10 mettent en œuvre une ou plusieurs fonctions d'assistance pour le conducteur. Par exemple, le premier véhicule 10 embarque un ou plusieurs des systèmes suivants, selon toute combinaison possible :

- système de régulation adaptative de vitesse, dit ACC (de l'anglais « Adaptive Cruise Control ») ;
- régulateur de vitesse prédictif, dit système PCC (de l'anglais « Predictive Cruise Control ») ;
- système d'adaptation intelligente de la vitesse, dit système ISA (de l'anglais « Intelligent Speed Adaptation ») ;
- système d'adaptation de la vitesse en virage, dit système CSA (de l'anglais « Curve Speed Assist ») ;
- système de contrôle électronique de stabilité, dit système ESC (de l'anglais « Electronic Stability Control » ou en français « Contrôle électronique de la stabilité »), DSC (de l'anglais « Dynamic Stability Control » ou en français « Contrôle dynamique de la stabilité ») ou encore ESP (de l'anglais « Electronic Stability Program » ou en français « Programme électronique de la stabilité ») ;
- système d'aide au maintien dans la file de circulation du véhicule, dit système LKA (de l'anglais « Lane-Keeping Assist » ou en français « Assistant de maintien dans la file »).

Les exemples de systèmes ADAS de la liste ci-dessus sont fournis à titre illustratif et ne sont pas limitatifs, cette liste n'étant pas exhaustive.

Selon un mode de réalisation particulier, le premier véhicule 10 embarque également un système de géolocalisation par satellite configuré pour déterminer la position courante du véhicule 10, le véhicule 10 embarquant à cet effet un récepteur d'un système de type GPS (de l'anglais « Global Positioning System » ou en français « Système mondial de positionnement ») ou le système Galileo par exemple en communication avec un calculateur du système embarqué du premier véhicule 10.

Selon un autre mode de réalisation particulier, le premier véhicule 10 embarque également un système de communication configuré pour communiquer avec un ou plusieurs dispositifs distants 111 via une infrastructure d'un réseau de communication sans fil. Le dispositif distant 111 correspond avantageusement à un dispositif configuré pour traiter des données, par exemple des données stockées en mémoire du dispositif distant 101 et/ou des données reçues du premier véhicule 10 et d'un ensemble de deuxièmes véhicules 11. Le dispositif distant 111 correspond par exemple à un serveur du « cloud » 100, le dispositif distant 111 hébergeant par exemple en mémoire une base de données comprenant un ensemble de données représentatives de paramètres de conduite du premier véhicule 10 et d'un profil de conduite de chaque deuxième véhicule d'un ensemble de deuxièmes véhicules 11.

Le système de communication du premier véhicule 10 (et de chaque deuxième véhicule de l'ensemble 11) comprend par exemple une ou plusieurs antennes de communication reliées à une unité de contrôle télématique, dite TCU (de l'anglais « Telematic Control Unit »), elle-même reliée à un ou plusieurs calculateurs du système embarqué du premier véhicule 10. La ou les antennes, l'unité TCU et le ou les calculateurs forment par exemple une architecture multiplexée pour la réalisation de différents services utiles pour le bon fonctionnement du véhicule et pour assister le conducteur et/ou les passagers du véhicule dans le contrôle du premier véhicule 10. Le ou les calculateurs et l'unité TCU communiquent et échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

Le premier véhicule 10 et chaque deuxième véhicule de l'ensemble de deuxièmes véhicules 11 sont dits connectés, en ce qu'ils sont chacun configurés pour communiquer des données avec un ou plusieurs dispositifs distants 111 et/ou entre eux via une ou plusieurs liaisons sans fil, par exemple via un ou plusieurs équipements de communication 110 de type antenne relais (réseau cellulaire) ou unité bord de route, dite UBR.

Le système de communication sans fil permettant l'échange de données entre le premier véhicule 10 et les deuxièmes véhicules 11 d'une part et le dispositif distant 111 d'autre part correspond par exemple à :

- un système de communication véhicule à infrastructure V2I (de l'anglais « vehicle-to-infrastructure »), par exemple basé sur les standards 3GPP LTE-V ou IEEE 802.11 p de ITS G5 ; ou
- un système de communication de type réseau cellulaire, par exemple un réseau de type LTE (de l'anglais « Long-Term Evolution » ou en français « Evolution à long terme »), LTE-Advanced (ou en français LTE-avancé) LTE 4G ou 5G ; ou
- un système de communication de type Wifi selon IEEE 802.11, par exemple selon IEEE 802.11n ou IEEE 802.11ac.

Un processus de contrôle d'un ou plusieurs premiers systèmes ADAS embarqués dans le premier véhicule 10 est avantageusement mis en œuvre, par exemple dans le dispositif distant 111, dans le premier véhicule 10 (c'est-à-dire par un ou plusieurs dispositifs embarqués dans le véhicule 10, par exemple un ou plusieurs calculateurs) et/ou par un système comprenant le premier véhicule 10 et le dispositif distant 111 relié en communication au premier véhicule 10 via une ou plusieurs connexions sans fil.

Un tel processus est avantageusement mis en œuvre sous la forme d'une méthode d'apprentissage automatique ou d'apprentissage machine. Une telle méthode d'apprentissage automatique est par exemple mise en œuvre par un réseau de neurones à propagation avant (de l'anglais « feedforward neural network »), un tel réseau correspondant à un réseau de neurones artificiels acycliques. Un tel réseau neuronal comprend par exemple plusieurs couches de neurones successives, dont au moins une partie forme une partie densément connectée du réseau neuronal. La partie densément connectée met par exemple en œuvre une ou plusieurs couches de neurones densément connectées (ou entièrement connectés) assurant la classification des informations selon un modèle de type MLP (de l'anglais « Multi Layers Perceptron » ou en français « Perceptrons multicouches ») par exemple.

Le processus de contrôle du ou des systèmes ADAS embarqués dans le premier véhicule 10 (ou des fonctions associées à ce ou ces systèmes ADAS) comprend avantageusement deux phases, chacune de ces phases comprenant une ou plusieurs opérations.

La première phase correspond à une phase dite d'apprentissage ou d'entrainement d'un ou plusieurs modèles de prédiction de paramètres de contrôle de système ADAS et la deuxième phase correspond à une phase dite de production ou de prédiction basée sur le ou les modèles appris dans la phase d'apprentissage et de données alimentant le ou les modèles appris.

La première phase et la deuxième phase sont par exemple mises en œuvre par le dispositif distant 111.

Selon une variante de réalisation, la première phase (c'est-à-dire la phase d'apprentissage) est mise en œuvre par le dispositif distant 111 (ou par un serveur hors « cloud », par exemple un serveur hébergé dans un centre (par exemple un bureau d'étude) adapté pour faire l'apprentissage) et la deuxième phase par le premier véhicule 10, par exemple par un calculateur du système embarqué du premier véhicule 10.

Selon une autre variante de réalisation, l'apprentissage est mis en œuvre dans la première phase et les paramètres du ou des modèles de prédiction sont affinés en temps réel à partir des données reçues pendant la deuxième phase par un ou plusieurs premiers véhicules.

Phase d'apprentissage

L'apprentissage mis en œuvre dans la première phase correspond avantageusement à un apprentissage non-supervisé à partir d'un ensemble de données associées à l'ensemble de deuxièmes véhicules 11 comprenant par exemple quelques dizaines, quelques centaines, des milliers ou des dizaines/centaines de milliers de deuxièmes véhicules. Selon une variante de réalisation, l'apprentissage mis en œuvre dans la première phase correspond à un apprentissage supervisé à partir de l'ensemble de données associées à l'ensemble de deuxièmes véhicules 11.

Dans une première opération de la phase d'apprentissage, le dispositif distant 111 collecte ou reçoit de chaque deuxième véhicule de l'ensemble 11 un ensemble de données et d'informations relatives à chaque deuxième véhicule. Les données et informations reçues d'un deuxième véhicule sont par exemple stockées en mémoire du dispositif distant 111 et associées au deuxième véhicule qu'elles concernent via un identifiant unique.

Le dispositif distant 111 reçoit par exemple de chaque deuxième véhicule une deuxième information représentative de l'âge du conducteur ou de la conductrice de chaque deuxième véhicule. Cette deuxième information est par exemple entrée par le conducteur via une IHM, par exemple une IHM graphique affichée sur un écran tactile du deuxième véhicule (ou d'un dispositif de communication mobile tel qu'un téléphone intelligent (de l'anglais « Smartphone ») relié en communication sans fil avec le deuxième véhicule. Selon une variante, cette deuxième information est reçue d'une base de données, par exemple une base de données client du constructeur des deuxièmes véhicules.

Le dispositif distant 111 reçoit en outre des troisièmes données représentatives de l'environnement dans lequel évolue chaque deuxième véhicule, au fur et à mesure des déplacements du deuxième véhicule.

Les troisièmes données comprennent par exemple des données représentatives du type de route ou de voie de circulation sur lequel circule le deuxième véhicule, par exemple route en milieu urbain, route communale, route départementale, route nationale ou autoroute ou encore route à une voie de circulation dans chaque sens, route à deux voies de circulation dans chaque sens de circulation, etc.

Les données de type de route sont par exemple déterminées par chaque deuxième véhicule, par exemple à partir d'un système de navigation embarqué ou mis en œuvre par un dispositif de communication mobile relié en communication avec le deuxième véhicule, puis transmises au dispositif distant 111.

Selon une variante de réalisation, les données de type de route sont déterminées par le dispositif distant 111 à partir d'une information de localisation (par exemple de type GPS) reçues de chaque deuxième véhicule et de données de cartographies stockées en mémoire du dispositif distant 111 ou d'un autre dispositif (par exemple un serveur) relié en communication filaire ou sans fil au dispositif distant 111.

Les troisièmes données sont par exemple horodatées, pour par exemple faire le lien avec l'ensemble des données reçues de chaque deuxième véhicule.

Selon une autre variante de réalisation, les troisièmes données comprennent en outre :

- des données météorologiques décrivant les conditions climatiques dans lesquelles circule chaque deuxième véhicule ; et/ou
- des données topologiques ou géométriques sur la route empruntée par le deuxième véhicule, par exemple présence de virage, courbure des virages, pente ascendante, pente descendante, etc.

Le dispositif distant 111 reçoit en outre des quatrièmes données représentatives de paramètres de conduite de chaque deuxième véhicule, au fur et à mesure des déplacements du deuxième véhicule.

Les paramètres de conduite sont transmis par chaque deuxième véhicule pour chaque manœuvre effectuée par le deuxième véhicule et/ou à intervalles réguliers.

Les paramètres de conduite correspondent par exemple à des paramètres cinématiques ou dynamiques de chaque deuxième véhicule et comprennent par exemple :

- une information représentative d'une accélération maximale atteinte par le deuxième véhicule pendant une manœuvre du deuxième véhicule, une manœuvre correspondant par exemple au passage d'un tronçon (ou tranche ou portion) de route particulier, par exemple un tronçon comprenant un virage, une pente, une nappe de brouillard et/ou de la pluie ;
- une information représentative d'une valeur de secousse (de l'anglais « jerk », aussi appelée valeur d'à-coup) maximale pendant la manœuvre, une valeur de secousse correspond avantageusement à une grandeur représentant une variation de l'accélération dans le temps, exprimée en m.s⁻³ ;

-   une information représentative de la vitesse du deuxième véhicule à la fin de la manœuvre ; et
-   une information représentative de la vitesse du deuxième véhicule au début de la manœuvre.

Dans une deuxième opération, les données reçues de l'ensemble de deuxièmes véhicules 11 sont partitionnées pour former un nombre déterminé de groupe (aussi appelés clusters).

Le nombre de groupes est par exemple fixé au préalable et est par exemple égal à 2, 3 ou 4. Selon une variante, le nombre de groupes est déterminés en fonction des données prises en compte pour le partitionnement des données en fonction des données prises en compte pour un tel partitionnement.

Le partitionnement (de l'anglais « clustering ») des données reçues de l'ensemble 11 de deuxièmes véhicules est par exemple partitionné en fonction des critères suivants :

-   des troisièmes informations représentatives des valeurs de secousse maximales pour l'ensemble des deuxièmes véhicules, par exemple la valeur de secousse maximale moyenne calculée pour chaque deuxième véhicule ; et
-   les deuxièmes informations représentatives d'âge des conducteurs des deuxièmes véhicules.

A cet effet, une valeur de secousse maximale moyenne est déterminée ou calculée pour chaque deuxième véhicule à partir de la valeur de secousse maximale obtenue, mesurée ou déterminée pour chaque manœuvre. Ainsi, pour un deuxième véhicule donné, la valeur de secousse maximale moyenne $J_{max,moy}$ de ce deuxième véhicule est calculée comme suit :

[Math 1]

$$J_{max,moy} = \frac{\sum J_{max}}{N}$$

Avec $J_{max}$ la valeur de secousse maximale pour chaque manœuvre et N le nombre de manœuvres.

Ainsi, pour chaque deuxième véhicule de l'ensemble 11, les critères suivants sont pris en compte :

-   la moyenne de l'ensemble des valeurs de secousse maximales obtenues pour l'ensemble des manœuvres effectuées ; et
-   l'âge du conducteur ou de la conductrice.

Le partitionnement de l'ensemble des données reçues pour l'ensemble 11 de deuxièmes véhicules, un tel ensemble de données comprenant les troisièmes et quatrièmes données, est mis en œuvre des 2 critères listés ci-dessus, à savoir la valeur de secousse maximale moyenne et l'âge.

Un tel partitionnement est mis en œuvre selon toutes méthodes connues de l'homme du métier. Par exemple, le partitionnement est mis en œuvre selon la méthode des k-moyennes (de l'anglais « k-means »), où k représente le nombre de groupes (ou clusters), par exemple selon l'algorithme de Lloyd.

La figure 2 illustre, selon un exemple de mise en œuvre particulier, la répartition 2 des éléments de l'ensemble à partitionner, chaque élément étant représenté par un point dans un espace à deux dimensions, avec en abscisse l'âge du conducteur et en ordonnées la valeur de secousse maximale moyenne.

Sur cette figure, il apparait qu'il existe une corrélation forte entre l'âge et la valeur de secousse maximale moyenne, les groupes de points se distinguant clairement avec un premier groupe de points 211, 212, 213, 214, un deuxième groupe de points 221, 222, 223 et un troisième groupe de points 231, 232, 233.

Chaque groupe est par exemple défini par un intervalle d'âges, avec comme limite inférieure l'âge minimal du groupe et comme limite supérieure de l'intervalle l'âge maximal du groupe. Selon une variante, chaque groupe est défini par une valeur d'âge moyens des conducteurs des deuxièmes véhicules du groupe.

Les groupes sont par exemple obtenus ou générés selon les opérations du processus suivant :

-   un nombre de groupe est fixé, par exemple égal à 3 groupes selon l'exemple de la figure 2, à chaque groupe étant associé un centroïde ;
-   un nombre de points (correspondant au nombre de groupes (ou centroïdes) fixé) est sélectionné aléatoirement, par exemple les 3 points 213, 221 et 231 ;
-   chaque autre point de l'ensemble de points (différent d'un centroïde sélectionné aléatoirement, c'est-à-dire les points 211, 212, 214, 222, 223, 232 et 233 selon notre exemple) est assigné au centroïde le plus proche en calculant par exemple la distance euclidienne entre chaque autre point 211, 212, 214, 222, 223, 232 et 233 et chaque centroïde 213, 221 et 231 ; ainsi pour chaque autre points, 3 distances sont obtenues et comparées entre elles, la distance la plus petite identifiant le centroïde le plus proche ; et
-   3 groupes 21, 22 et 23 sont obtenus au fur et à mesure de l'assignation des autres points aux centroïdes, le centroïde de chaque groupe généré étant mis à jour régulièrement dans chaque groupe en cours de formation en calculant, pour chaque groupe, la moyenne des positions de chaque point du groupe ; en définissant comme nouveau centroïde du groupe la moyenne des positions ; et en réitérant les étapes de calcul de la moyenne des points et de définition d'un nouveau centroïde jusqu'à ce que la moyenne des points obtenus ne varie plus entre deux itérations successives.

Les 3 groupes de points 21, 22 et 23 sont obtenus à l'issue du processus ci-dessus de partitionnement selon la méthode des k-moyennes, chaque point représentant un deuxième véhicule et les données associées (c'est-à-dire les troisièmes et quatrièmes données).

Dans une troisième opération, un modèle de prédiction de paramètres de contrôle d'un ou plusieurs systèmes ADAS est appris pour chaque groupe à partir des données associées à chaque groupe, les données associées à un groupe 21, 22, 23 correspondant aux données (troisièmes et quatrièmes données) collectées des deuxièmes véhicules de ce groupe 21, 22, 23, respectivement.

A titre d'exemple, un modèle de prédiction est appris pour chaque groupe et pour chaque système ADAS, ou pour chaque groupe et chaque groupe de systèmes ADAS. Un groupe de systèmes ADAS correspond par exemple à un ensemble de systèmes ADAS utilisant des paramètres de contrôle similaires ou identiques. Par exemple, les systèmes ADAS de type ACC, PCC, ISA et CSA forment un groupe en ce qu'ils se basent tous sur des paramètres cinématiques ou dynamiques du véhicule (c'est-à-dire la vitesse et/ou l'accélération).

Chaque modèle de prédiction est appris en alimentant un réseau de neurones (par exemple de type à propagation avant) avec les troisièmes et quatrièmes données du groupe 21, 22, 23 auquel est associé le modèle de prédiction.

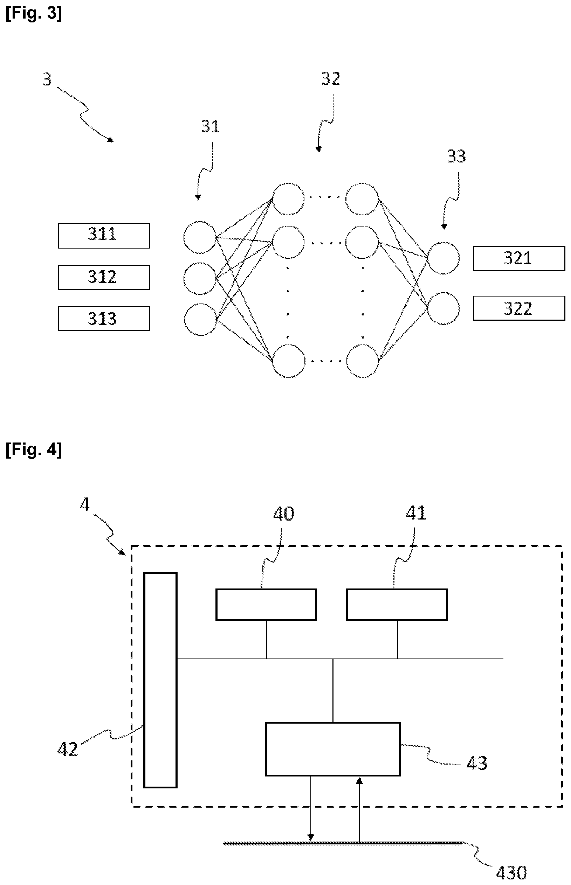

La figure 3 illustre un exemple d'un tel réseau de neurones 3. Des données 311 représentatives du type de route, des données 312 représentatives de vitesse en début de manœuvre et des données 313 représentatives de vitesse en fin de manœuvre sont par exemple fournies en entrée du réseau de neurones 3, à une première couche 31 du réseau de neurones.

Ces données 311, 312, 313 sont traitées par différentes couches 31, 32 et 33 du réseau de neurones, dont une partie 32 correspond à une partie densément connectée du réseau 3. En sortie sont par exemple obtenues des données 321 représentatives de valeur de secousse maximale et des données 322 représentatives d'accélération maximale, les données 321 et 322 correspondant à des paramètres de contrôle du ou des systèmes ADAS, par exemple des paramètres intrinsèques du ou des systèmes ADAS.

Un modèle de prédiction est ainsi obtenu pour chaque groupe 21, 22, 23 issu du partitionnement de l'ensemble de données obtenues des deuxièmes véhicules, chaque modèle de prédiction étant associé à une information d'âge (par exemple un intervalle d'âge ou un âge moyen).

Une telle phase d'apprentissage permet ainsi de déterminer un modèle de prédiction pour chaque tranche d'âges (ou chaque âge moyen), pour chaque système ADAS ou chaque groupe de systèmes ADAS.

Phase de production

La phase de production est par exemple mise en œuvre par un dispositif embarqué dans le premier véhicule 10, par exemple un calculateur. Selon cet exemple, les paramètres de chaque modèle de prédiction obtenu dans la phase de production sont stockés dans une mémoire du dispositif, pour exécution des modèles de prédiction par ce dispositif. Selon cet exemple, le premier véhicule 10 correspond à un véhicule connecté ou à un véhicule non connecté.

Selon une variante, la phase de production est mise en œuvre par le dispositif distant 111. Selon cet exemple, le premier véhicule 10 correspond à un véhicule connecté, c'est-à-dire un véhicule configuré pour échanger des données avec le dispositif distant.

Dans une première opération de la phase de production, le dispositif en charge de la phase de production reçoit une première information représentative de l'âge du conducteur ou de la conductrice du premier véhicule 10.

Cette première information est par exemple entrée par le conducteur du premier véhicule via une IHM, par exemple une IHM graphique affichée sur un écran tactile du premier véhicule 10 (ou d'un dispositif de communication mobile tel qu'un téléphone intelligent (de l'anglais « Smartphone ») relié en communication sans fil avec le premier véhicule 10.

Par exemple, lorsque le conducteur active le système ADAS, une fenêtre de dialogue s'affiche sur l'écran et demandant au conducteur s'il souhaite activer le système ADAS selon un mode de fonctionnement standard ou selon un mode de fonctionnement personnalisé. Si le conducteur sélectionne le mode de fonctionnement personnalisé, alors une nouvelle fenêtre de dialogue s'affiche pour requérir l'âge du conducteur.

Selon une variante de réalisation, la première information relative à l'âge n'est requise qu'une seule fois, par exemple à la première activation du système ADAS et est stockée en mémoire du calculateur.

Selon encore une variante, le mode de fonctionnement personnalisé est activé dans les paramètres du premier véhicule 10 comme mode de fonctionnement par défaut et la première information est stockée en mémoire.

Dans une deuxième opération, des premières données représentatives d'un environnement du premier véhicule 10 et des deuxièmes données représentatives de paramètres de conduite du premier véhicule 10 sont reçues.

Les premières données sont de même nature que les troisièmes données décrites en regard de la phase d'apprentissage.

Les deuxièmes données correspondent par exemple à des paramètres cinématiques ou dynamiques du premier véhicule, et sont par exemple de même nature que les quatrièmes données décrites en regard de la phase d'apprentissage.

Dans une troisième opération, la première information est comparée aux informations d'âge associées aux différents modèles de prédiction obtenus dans la phase d'apprentissage (ou de manière similaire aux informations d'âges associées aux différents groupes 21, 22, 23).

Dans une quatrième opération, un modèle de prédiction est sélectionné parmi l'ensemble des modèles de prédiction obtenus ou générés lors de la phase d'apprentissage en fonction du résultat de la comparaison de la troisième opération.

Par exemple, le modèle de prédiction sélectionné correspond à celui dont la tranche d'âges (ou intervalle d'âges) associée comprend l'âge identifié par la première information. Lorsqu'aucune tranche d'âge associé aux modèles de prédiction ne comprend l'âge identifié par la première information, le modèle de prédiction sélectionné correspond à celui dont l'une des limites inférieure ou supérieure de la tranche d'âge est la plus proche de l'âge identifié par la première information.

Lorsque l'information d'âge associée à chaque modèle correspond à un âge moyen, le modèle de prédiction sélectionné correspond à celui dont l'âge moyen associé est le plus proche de l'âge identifié par la première information.

Dans une cinquième opération, un ensemble de paramètres de contrôle du système ADAS activé par le conducteur du premier véhicule sont déterminés en alimentant le modèle de prédiction sélectionné avec les premières données et les deuxièmes données obtenues à la deuxième opération.

La détermination est avantageusement mise en œuvre par un réseau de neurones tel que le réseau de neurones 3 de la figure 3, les données 311, 312 et 313 correspondant aux premières et deuxièmes données.

En sortie du réseau de neurones sont obtenus les paramètres de contrôle du système ADAS tels que par exemple la valeur de secousse maximale 321 et la valeur d'accélération maximale 322 que le système ADAS ne doit pas dépasser, un tel système correspondant par exemple à un ou plusieurs des systèmes ADAS suivants : système ACC, système PCC, système ISA et/ou système CSA.

Dans une sixième opération, le système ADAS (ou groupe de systèmes ADAS) du premier véhicule 10 est contrôlé en fonction de l'ensemble de paramètres de contrôle obtenus à la cinquième opération.

Ce système ADAS est en outre contrôlé en fonction de valeurs de consignes fournies par le conducteur, le cas échéant.

Ainsi, le système ADAS est mis en œuvre de manière adaptée à l'âge du conducteur du premier véhicule et en fonction de la situation dans laquelle se trouve le premier véhicule 10, les paramètres de contrôle du système ADAS étant déterminés en fonction d'un modèle d'une part appris à partir de données issues de véhicules conduits par des conducteurs ayant un âge similaire à ou proche de l'âge du conducteur du premier véhicule et d'autre part alimenté par des données représentatives de la situation dans laquelle se trouve le premier véhicule 10 (c'est-à-dire les premières et les deuxièmes données).

La figure 4 illustre schématiquement un dispositif 4 configuré pour le contrôle de(s) système(s) d'aide à la conduite d'un véhicule, par exemple le premier véhicule 10, selon un exemple de réalisation particulier et non limitatif de la présente invention. Le dispositif 4 correspond par exemple à un dispositif embarqué dans le premier véhicule 10, par exemple un calculateur. Selon un autre exemple, le dispositif 4 correspond à un dispositif de calcul ou de traitement de données, par exemple le dispositif distant 111.

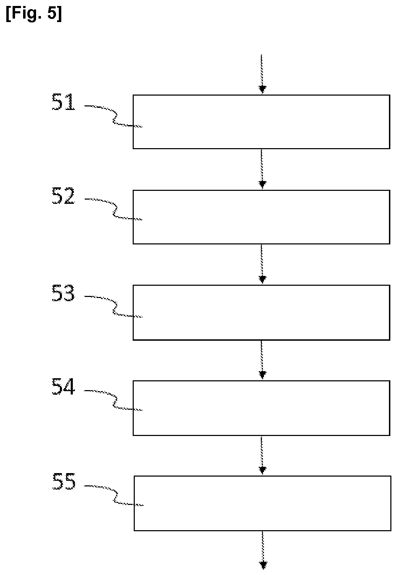

Le dispositif 4 est par exemple configuré pour la mise en œuvre des opérations décrites en regard des figures 1 à 3 et/ou des étapes du procédé décrit en regard de la figure 5. Des exemples d'un tel dispositif 4 comprennent, sans y être limités, un équipement électronique embarqué tel qu'un ordinateur de bord d'un véhicule, un calculateur électronique tel qu'une UCE (« Unité de Commande Electronique »), une unité de contrôle télématique, dite TCU (de l'anglais « Telematic Control Unit »), un téléphone intelligent, une tablette, un ordinateur portable, un serveur, ou une combinaison de plusieurs des dispositifs énumérés ci-avant. Les éléments du dispositif 4, individuellement ou en combinaison, peuvent être intégrés dans un unique circuit intégré, dans plusieurs circuits intégrés, et/ou dans des composants discrets. Le dispositif 4 peut être réalisé sous la forme de circuits électroniques ou de modules logiciels (ou informatiques) ou encore d'une combinaison de circuits électroniques et de modules logiciels.

Le dispositif 4 comprend un (ou plusieurs) processeur(s) 40 configurés pour exécuter des instructions pour la réalisation des étapes du procédé et/ou pour l'exécution des instructions du ou des logiciels embarqués dans le dispositif 4. Le processeur 40 peut inclure de la mémoire intégrée, une interface d'entrée/sortie, et différents circuits connus de l'homme du métier. Le dispositif 4 comprend en outre au moins une mémoire 41 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 41.

Selon différents modes de réalisation particuliers, le dispositif 4 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un mode de réalisation particulier et non limitatif, le dispositif 4 comprend un bloc 42 d'éléments d'interface pour communiquer avec des dispositifs externes, par exemple un serveur distant ou le « cloud », une unité TCU. Les éléments d'interface du bloc 42 comprennent une ou plusieurs des interfaces suivantes :

- interface radiofréquence RF, par exemple de type Bluetooth® ou Wi-Fi®, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif 4 via l'interface du bloc 42 en utilisant un réseau Wi-Fi® tel que selon IEEE 802.11, un réseau ITS G5 basé sur IEEE 802.11p ou un réseau mobile tel qu'un réseau 4G (ou LTE Advanced selon 3GPP release 10 - version 10) ou 5G, notamment un réseau LTE-V2X.

Selon un autre mode de réalisation particulier, le dispositif 4 comprend une interface de communication 43 qui permet d'établir une communication avec d'autres dispositifs (tels que d'autres calculateurs du système embarqué ou d'autres serveurs) via un canal de communication 430. L'interface de communication 43 correspond par exemple à un transmetteur configuré pour transmettre et recevoir des informations et/ou des données via le canal de communication 430. L'interface de communication 43 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un mode de réalisation particulier supplémentaire, le dispositif 4 peut fournir des signaux de sortie à un ou plusieurs dispositifs externes, tels qu'un écran d'affichage, un ou des haut-parleurs et/ou d'autres périphériques (système de projection) via respectivement des interfaces de sortie adaptées. Selon une variante, l'un ou l'autre des dispositifs externes est intégré au dispositif 4. L'écran d'affichage correspond par exemple à un écran, tactile ou non.

La figure 5 illustre un organigramme des différentes étapes d'un procédé de contrôle d'un (ou plusieurs) système ADAS d'un véhicule, par exemple le premier véhicule 10, selon un exemple de réalisation particulier et non limitatif de la présente invention. Le procédé est par exemple mis en œuvre par un dispositif embarqué dans le véhicule 10, par le dispositif distant 111 ou par le dispositif 4 de la figure 4.

Dans une première étape 51, une première information représentative d'âge d'un conducteur du premier véhicule est reçue.

Dans une deuxième étape 52, des premières données représentatives d'un environnement du premier véhicule et des deuxièmes données représentatives de paramètres de conduite du premier véhicule sont reçues.

Dans une troisième étape 53, un modèle de prédiction de paramètres de contrôle de système ADAS est sélectionné parmi une pluralité de modèles de prédiction de paramètres de contrôle de système ADAS en fonction de la première information.

Dans une quatrième étape 54, un ensemble de paramètres de contrôle du système ADAS est déterminé en alimentant le modèle de prédiction sélectionné avec les premières données et les deuxièmes données.

Dans une cinquième étape 55, le système ADAS est contrôlé en fonction de l'ensemble de paramètres de contrôle.

Selon une variante de réalisation, les variantes et exemples des opérations décrits en relation avec les figures 1 à 3 s'appliquent aux étapes du procédé de la figure 5.

L'invention concerne également un véhicule, par exemple automobile ou plus généralement un véhicule autonome à moteur terrestre, comprenant le dispositif 4 de la figure 4.

L'invention concerne également un système comprenant le dispositif 4 de la figure 4 (ou un ensemble de dispositifs 4) embarqué(s) dans un véhicule et un dispositif de traitement de données distant, par exemple le dispositif distant 111, le ou les dispositifs 4 étant reliés en communication sans fil avec le dispositif de traitement de données distant.

## Revendications

1. Procédé de contrôle d'un système d'aide à la conduite, dit système ADAS, d'un premier véhicule (10), ledit procédé comprenant les étapes suivantes :

  - réception (51) d'une première information représentative d'âge d'un conducteur dudit premier véhicule (10) ;
  - réception (52) de premières données représentatives d'un environnement dudit premier véhicule (10) et de deuxièmes données représentatives de paramètres de conduite dudit premier véhicule (10) ;
  - sélection (53) d'un modèle de prédiction de paramètres de contrôle de système ADAS parmi une pluralité de modèles de prédiction de paramètres de contrôle de système ADAS en fonction de ladite première information ;
- détermination (54) d'un ensemble de paramètres de contrôle dudit système ADAS en alimentant ledit modèle de prédiction sélectionné avec lesdites premières données et lesdites deuxièmes données ;
- contrôle (55) dudit système ADAS en fonction dudit ensemble de paramètres de contrôle,

**caractérisé en ce qu'**en outre, durant une phase d'apprentissage préalable auxdites étapes de réceptions, de sélection, de détermination et de contrôle, les étapes suivantes :

- réception, pour chaque deuxième véhicule d'un ensemble (11) de deuxièmes véhicules, d'une deuxième information représentative d'âge d'un conducteur dudit chaque deuxième véhicule ;
- réception, pour ledit chaque deuxième véhicule, d'un ensemble de données comprenant des troisièmes données représentatives d'un environnement dudit deuxième véhicule et des quatrièmes données représentatives de paramètres de conduite dudit deuxième véhicule ;
- partitionnement des données dudit ensemble de données en une pluralité de groupes (21, 22, 23) en fonction des deuxièmes informations et de troisièmes informations représentatives de valeur de secousse maximale pour chaque deuxième véhicule obtenues desdites quatrième données..

2. Procédé selon la revendication 1, comprenant en outre, durant ladite phase d'apprentissage, une étape d'apprentissage, pour chaque groupe (21, 22, 23) de ladite pluralité, d'un modèle de prédiction de paramètres de contrôle de système ADAS de ladite pluralité de modèles de prédiction de paramètres de contrôle de système ADAS à partir des données dudit ensemble de données associées audit chaque groupe (21, 22, 23).

3. Procédé selon l'une des revendications 1 à 2, pour lequel ledit partitionnement est un partitionnement en k-moyennes.

4. Procédé selon l'une des revendications 1 à 3, pour lequel chaque groupe (21, 22, 23) est défini par un intervalle d'âges compris entre un âge minimal et un âge maximal, ladite sélection d'un modèle de prédiction de paramètres de contrôle de système ADAS comprenant une comparaison entre ladite première information et chaque intervalle d'âges de ladite pluralité de groupes (21, 22, 23), ledit modèle de prédiction de paramètres de contrôle de système ADAS sélectionné correspondant au modèle de prédiction associé au groupe défini par l'intervalle d'âges comprenant l'âge du conducteur dudit premier véhicule (10).

5. Procédé selon l'une des revendications 1 à 4, pour lequel chaque modèle de prédiction de paramètres de contrôle de système ADAS de ladite pluralité de modèles de prédiction de paramètres de contrôle de système ADAS est mis en œuvre dans un réseau de neurones à propagation avant (3).

6. Procédé selon l'une des revendications 1 à 5, pour lequel lesdites premières données comprennent des données représentatives de type de route (101) sur laquelle circule ledit premier véhicule (10), lesdites deuxièmes données comprennent des données représentatives de vitesse dudit premier véhicule (10) et ledit ensemble de paramètres de contrôle dudit système ADAS comprend des données représentatives de valeur de secousse maximale et des données représentatives d'accélération maximale.

7. Programme d'ordinateur comportant des instructions pour la mise en œuvre du procédé selon l'une quelconque des revendications précédentes, lorsque ces instructions sont exécutées par un processeur.

8. Dispositif (4) de contrôle d'un système d'aide à la conduite d'un véhicule, ledit dispositif (4) comprenant une mémoire (41) associée à au moins un processeur (40) configuré pour la mise en œuvre des étapes du procédé selon la revendication 1.

9. Véhicule (10) comprenant le dispositif (4) selon la revendication 8.

**Patentansprüche**

1. Verfahren zum Steuern eines Fahrassistenzsystems, genannt ADAS-System, eines ersten Fahrzeugs (10), wobei das Verfahren die folgenden Schritte umfasst:

- Empfangen (51) einer ersten Information, die das Alter eines Fahrers des ersten Fahrzeugs (10) darstellt;
- Empfangen (52) erster Daten, die eine Umgebung des ersten Fahrzeugs (10) darstellen, und zweiter Daten, die Fahrparameter des ersten Fahrzeugs (10) darstellen;
- Auswählen (53) eines Modells zum Vorhersagen von Steuerparametern des ADAS-Systems aus einer Vielzahl von Modellen zum Vorhersagen von Steuerparametern des ADAS-Systems als Funktion der ersten Information;
- Bestimmen (54) eines Satzes von Steuerparametern des ADAS-Systems durch Zuführen der ersten und zweiten Daten in das ausgewählte Vorhersagemodell;

- Steuern (55) des ADAS-Systems als Funktion des Satzes von Steuerparametern, **dadurch gekennzeichnet, dass** außerdem während einer Lernphase vor den Schritten Empfangen, Auswählen, Bestimmen und Steuern die folgenden Schritte ausgeführt werden:

- Empfangen einer zweiten Information für jedes zweite Fahrzeug einer Gruppe (11) von zweiten Fahrzeugen, die das Alter des Fahrers jedes zweiten Fahrzeugs angibt;
- Empfangen eines Datensatzes für jedes zweite Fahrzeug, der dritte Daten umfasst, die die Umgebung des zweiten Fahrzeugs darstellen, und vierte Daten, die Fahrparameter des zweiten Fahrzeugs darstellen;
- Aufteilen der Daten des Datensatzes in mehrere Gruppen (21, 22, 23) als Funktion der zweiten Information und der dritten Information, die den aus den vierten Daten gewonnenen maximalen Rüttelwert für jedes zweite Fahrzeug angibt.

2. Das Verfahren nach Anspruch 1, das während der Lernphase ferner einen Schritt des Lernens für jede Gruppe (21, 22, 23) der Vielzahl von ADAS-System-Steuerparameter-Vorhersagemodellen aus Daten des Datensatzes umfasst, der jeder Gruppe (21, 22, 23) zugeordnet ist.

3. Verfahren nach einem der Ansprüche 1 bis 2, bei dem die Partitionierung eine K-Means-Partitionierung ist.

4. Verfahren nach einem der Ansprüche 1 bis 3, bei dem jede Gruppe (21, 22, 23) durch ein Altersintervall zwischen einem Mindestalter und einem Höchstalter definiert ist, wobei die Auswahl eines Vorhersagemodells für Steuerparameter des ADAS-Systems einen Vergleich zwischen den ersten Informationen und jedem Altersintervall der Vielzahl von Gruppen (21, 22, 23) umfasst, wobei das ausgewählte Vorhersagemodell für Steuerparameter des ADAS-Systems dem Vorhersagemodell entspricht, das der Gruppe zugeordnet ist, die durch das Altersintervall definiert ist, das das Alter des Fahrers des ersten Fahrzeugs (10) umfasst.

5. Das Verfahren gemäß einem der Ansprüche 1 bis 4, wobei jedes ADAS-System-Steuerparameter-Vorhersagemodell der Vielzahl von ADAS-System-Steuerparameter-Vorhersagemodellen in einem vorwärtsgerichteten neuronalen Netzwerk (3) implementiert ist.

6. Verfahren nach einem der Ansprüche 1 bis 5, bei dem die ersten Daten Daten umfassen, die den Typ der Straße (101) darstellen, auf der das erste Fahrzeug (10) fährt, die zweiten Daten Daten umfassen, die die Geschwindigkeit des ersten Fahrzeugs (10) darstellen, und der Satz von Steuerparametern des ADAS-Systems Daten umfasst, die den maximalen Ruckwert darstellen, und Daten, die die maximale Beschleunigung darstellen.

7. Computerprogramm, das Anweisungen zum Implementieren des Verfahrens nach einem der vorhergehenden Ansprüche umfasst, wenn diese Anweisungen von einem Prozessor ausgeführt werden.

8. Vorrichtung (4) zur Steuerung eines Fahrassistenzsystems eines Fahrzeugs, wobei die Vorrichtung (4) einen Speicher (41) umfasst, der mit mindestens einem Prozessor (40) verbunden ist, der zur Durchführung der Schritte des Verfahrens gemäß Anspruch 1 konfiguriert ist.

9. Fahrzeug (10) umfassend die Vorrichtung (4) gemäß Anspruch 8.

**Claims**

1. Method for controlling a driving assistance system, called ADAS system, of a first vehicle (10), said method comprising the following steps:

- receiving (51) a first piece of information representative of the age of a driver of said first vehicle (10);
- receiving (52) first data representative of an environment of said first vehicle (10) and second data representative of driving parameters of said first vehicle (10);
- selecting (53) a model for predicting ADAS system control parameters from among a plurality of models for predicting ADAS system control parameters as a function of said first piece of information;
- determining (54) a set of control parameters of said ADAS system by feeding said selected prediction model with said first data and said second data;
- controlling (55) said ADAS system as a function of said set of control parameters, **characterized in that** furthermore, during a learning phase prior to said reception, selection, determination and control steps, the following steps:

- reception, for each second vehicle of a set (11) of second vehicles, of a second piece of information representative of the age of a driver of said each second vehicle;

- reception, for said each second vehicle, of a set of data comprising third data representative of an environment of said second vehicle and fourth data representative of driving parameters of said second vehicle;
- partitioning of the data of said set of data into a plurality of groups (21, 22, 23) as a function of the second information and third information representative of maximum shaking value for each second vehicle obtained from said fourth data.

2. The method of claim 1, further comprising, during said learning phase, a step of learning, for each group (21, 22, 23) of said plurality, an ADAS system control parameter prediction model of said plurality of ADAS system control parameter prediction models from data of said data set associated with said each group (21, 22, 23).

3. Method according to one of claims 1 to 2, for which said partitioning is a k-means partitioning.

4. Method according to one of claims 1 to 3, for which each group (21, 22, 23) is defined by an age interval between a minimum age and a maximum age, said selection of an ADAS system control parameter prediction model comprising a comparison between said first information and each age interval of said plurality of groups (21, 22, 23), said selected ADAS system control parameter prediction model corresponding to the prediction model associated with the group defined by the age interval comprising the age of the driver of said first vehicle (10).

5. The method of one of claims 1 to 4, wherein each ADAS system control parameter prediction model of said plurality of ADAS system control parameter prediction models is implemented in a forward propagation neural network (3).

6. Method according to one of claims 1 to 5, for which said first data comprise data representative of the type of road (101) on which said first vehicle (10) is traveling, said second data comprise data representative of the speed of said first vehicle (10) and said set of control parameters of said ADAS system comprises data representative of the maximum jolt value and data representative of maximum acceleration.

7. Computer program comprising instructions for implementing the method according to any one of the preceding claims, when these instructions are executed by a processor.

8. Device (4) for controlling a driving assistance system of a vehicle, said device (4) comprising a memory (41) associated with at least one processor (40) configured for implementing the steps of the method according to claim 1.

9. Vehicle (10) comprising the device (4) according to claim 8.

[Fig. 1]

[Fig. 2]

[Fig. 3]

[Fig. 4]

[Fig. 5]

## RÉFÉRENCES CITÉES DANS LA DESCRIPTION

**Documents brevets cités dans la description**

- US 2017297564 A1